(19) Europäisches Patentamt
European Patent Office
Office européen des brevets

(11) Veröffentlichungsnummer: **0 235 524 B1**

(12) # EUROPÄISCHE PATENTSCHRIFT

(45) Veröffentlichungstag der Patentschrift: **15.04.92**

(51) Int. Cl.$^5$: **C09B 67/26**, C07C 245/00, D06P 1/06

(21) Anmeldenummer: **87100677.1**

(22) Anmeldetag: **20.01.87**

(54) **Verfahren zur Herstellung konzentrierter Lösungen von anionischen Farbstoffen.**

(30) Priorität: **29.01.86 DE 3602524**

(43) Veröffentlichungstag der Anmeldung:
**09.09.87 Patentblatt 87/37**

(45) Bekanntmachung des Hinweises auf die Patenterteilung:
**15.04.92 Patentblatt 92/16**

(84) Benannte Vertragsstaaten:
**CH DE FR GB LI**

(56) Entgegenhaltungen:
**EP-A- 0 201 690**
**FR-A- 2 299 381**
**FR-A- 2 341 625**

(73) Patentinhaber: **BAYER AG**
**W-5090 Leverkusen 1 Bayerwerk(DE)**

(72) Erfinder: **Wolff, Joachim, Dr.**
**Schlinghofer Strasse 38**
**W-5068 Odenthal(DE)**
Erfinder: **Wolf, Karl-Heinz, Dr.**
**Paul-Klee-Strasse 77**
**W-5090 Leverkusen 1(DE)**
Erfinder: **Klipper, Reinhold Maria, Dr.**
**Bismarckstrasse 13**
**W-5000 Köln 50(DE)**

**EP 0 235 524 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung lagerstabiler konzentrierter wäßriger Lösungen von anionischen Azofarbstoffen, insbesondere anionischen Azoreaktivfarbstoffen.

Der Einsatz von Farbstofflösungen anstelle der bisher üblichen Farbstoffpulver hat in den letzten Jahren immer größere Bedeutung erlangt, da sie gegenüber den herkömmlichen Präparationen einige überzeugende Vorteile bieten: Vermeidung von Staubproblemen, leichte Dosierbarkeit, gute und rasche Verteilung im Anwendungsmedium und die damit verbundenen einwandfreien Färbeergebnisse.

Derartige Flüssigeinstellungen sollten mindestens 10 Gew.-% an Reinfarbstoff enthalten und über größere Zeiträume selbst bei Temperaturen um den Gefrierpunkt unverändert haltbar sein.

Diese Forderung wird jedoch normalerweise von den bisher in den Pulvermarken verwendeten Natriumsalzen der Farbstoffsäuren nicht erfüllt.

Es ist deshalb bereits vorgeschlagen worden (vgl. z.B. EP-A 43 927), durch geeignete Wahl der Synthesebedingungen anstellte der Natriumsalze die im allgemeinen besser löslichen Lithiumsalze herzustellen.

Aber auch die daraus zubereiteten Lösungen konnten hinsichtlich der Lagerstabilität nich voll befriedigen.

Gute Ergebnisse liefern in dieser Hinsicht auch diverse literaturbekannte Membrantrennverfahren (vgl. z.B. EP-A 59 782, 114 031 und 126 830 sowie GB-A 20 15 018), die jedoch sehr zeit- und kostenaufwendig sind.

Es wurde nun überrachsenderweise gefunden, daß man auf verhältnismäßig einfache Weise zu konzentrierten Lösungen anionischer Azofarbstoffe durch Diazotieren eines aromatischen Amins und Vereinigung der resultierenden Diazoniumsalzlösung mit einer sulfogruppenhaltigen Kupplungskomponente gelangt, wenn man als alleiniger Säurespender für die Diazotierungsreaktion - anstellte der sonst üblichen Mineral- oder Fettsäuren - eine niedermolekulare nicht-tensidartige aromatische Sulfonsäure verwendet.

Die Verwendung derartiger Sulfonsäuren bei der Herstellung von Azofarbstoffen durch Diazotieren und Kuppeln ist an sich nichts Neues.

Allerdings dienten diese Säuren bislang ausschließlich anderen Zwecken.

Nach Houben-Weyl X/3, S. 19 wird beispielsweise Xylolsulfonat in Gegenwart von Salzsäure für analytische und präparative Zwecke bei der Diazotierung bestimmter Amine eingesetzt.

Gemäß Nature 1956, S. 1069 werden mit Hilfe von Arylsulfonsäuren benzollösliche feste Diazoniumsalze hergestellt.

Weiterhin ist aus DE-A 24 48 994 bekannt, durch Diazotieren und Kuppeln in Gegenwart von aromatischen Sulfonsäuren Azopigmente herzustellen.

Darüber hinaus ist bereits vorgeschlagen worden (vgl. DE-A 26 07 122), bei der Diazotierung und Kupplung als einzige Säure "Dispergiermittelsäuren" worunter höhermolekulare Kondensationsprodukte aus Formaldehyd und aromatischen Sulfonsäuren verstanden werden, einzusetzen. Auf diese Weise sollen auch Azofarbstoff- Lösungen hergestellt werden können, was jedoch nicht zutrifft. Tatsächlich werden auch bei Verwendung wasserloslicher Kupplungskomponenten aufgrund des Elektrolytcharakters der Dispergiermittelsäuren Dispersionen erhalten - wie auch der Name bereits sagt.

Schließlich ist aus DE-A 25 03 714, 25 03 791 und 26 56 503 bekannt, bei der Herstellung von salzarmen Azofarbstoffen als einzigen Säurespender die sulfongruppenhaltigen Diazo- und/oder Kupplungskomponenten zu verwenden.

Allerdings ist dieses Verfahren nicht universell anwendbar und liefert selbst in solchen Fällen, wo es funktioniert, aufgrund unerwünschter Nebenreaktionen verunreinigte Endprodukte.

Demgegenüber sind die erfindungsgemäß einzusetzenden Arylsulfonsäuren allgemein anwendbar, wobei sie zu Produkten hoher Reinheit führen.

Bei den in dem erfindungsgemäßen Verfahren verwendeten Säuren handelt es sich vorzugsweise um solche der Benzol-, Naphthalin- und Diphenylreihe.

Beispielhaft seien genannt:

Benzolsulfon- und disulfonsäuren, Toluolsulfonsäuren, Xylolsulfonsäuren, Diphenylsulfonsäuren, Naphthalinsulfonund -disulfonsäuren.

Die Diazotierung wird vorzugsweise in wäßrigem oder wäßrig-organischem Medium durchgeführt, und zwar bei Temperaturen von -20 bis +50 °C. In besonderen Fällen empfiehlt sich auch ein rein organisches Medium.

Im allgemeinen werden mindestens stöchiometrische Mengen der organischen Sulfonsäuren verwendet, d.h. mindestens 1 Äquivalent Säure pro Mol Salz der salpetrigen Säure.

Das für die Diazotierungsreaktion erforderlich 2. Äquivalent Säure kann ein saure Gruppen tragender

Ionenaustauscher liefern.

Als solche kommen sowohl anorganische als auch organische feste Kationenaustauscher in Betracht.

Geeignete organische Ionenaustauscher auf Kunstharz-Basis sind. z.B. solche in Perl- oder Granulatform bzw. stark saure makroporöse oder gelförmige Perlpolymerisate auf der Basis von vernetztem Polystyrol, die Sulfonsäuregruppen tragen. Ferner kommen in Betracht Perlpolymere auf Polystyrolbasis, bei denen die Styrolkerne durch folgende Gruppen substituiert sein können:

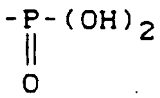 ; 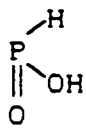 ; $-CH_2-N(CH_2COOH)_2$; 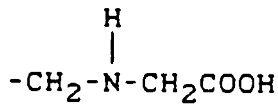 ;

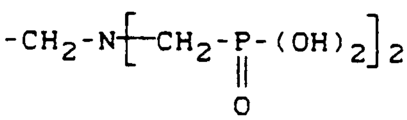 ; 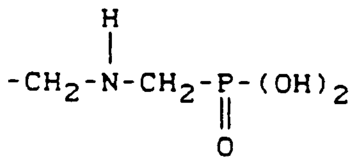 .

Weiterhin können auch schwach saure Kationenaustauscher mit COOH-Gruppen in Perl- oder Granulatform, bevorzugt aber in Perlform eingesetzt werden. Dazu gehören Kationenaustausche auf der Basis von vernetzter Acrylsäure oder vernetzter Methacrylsäure sowie vernetztem und anschließend verseiftem Maleinsäureanhydrid. Als Vernetzer werden dabei Polyvinylaromaten, bevorzugt Divinylbenzol, Octadien-1.7 und Hexadien-1.5 allein oder deren Kombinationen mit Divinylbenzol, eingesetzt.

In Betracht kommen auch Ionenaustauscher mit sauren Gruppen, die durch Kondensationsreaktionen hergestellt wurden. Hierzu gehören Polykondensate von Phenol oder Phenolderivaten mit Formaldehyd, von am Kern sulfonierten Aromaten (Phenolsäuren oder Naphthalinsulfonsäure) mit Formaldehyd, sowie solche Produkte, die durch gleichzeitige Reaktion von HCHO, Natriumsulfit und Phenol hergestellt werden.

Geeignet sind auch carboxylgruppenhaltige Kondensationsharze, die duch Reaktion von HCHO mit z.B. 1,3,5-Resorcylsäure oder durch Umsetzung von HCHO mit Phenoxyessigsäure, Resorcin-O-essigsäure oder analogen Verbindungen hergestellt werden.

In Betracht kommen ferner schwach saure Harze, die durch Kondensation von Phenol oder Resorcin mit Formaldehyd hergestellt wurden. Neben den synthetischen organischen Kationenaustauschern können auch anorganische Kationenaustauscher als feste Säuren eingesetzt werden. Dazu gehört insbesondere die große Klasse der Zeolith-Minerale oder die Klasse der Glaukonite (Grünsande). Zu den Zeolithen gehören u.a. Mordenit (Ca, $K_2$, $Na_2$) [Al $Si_5O_{12}$]$_2$.6,6$H_2O$ und Natrolith $Na_2[Si_3Al_2O_{10}]$.2 $H_2O$.

Kationenaustauscher der genannten Art sind in großer Zahl im Handel und in der Literatur beschrieben, vgl. z.B. Ullmanns Enzyklopädie d. Technischen Chemie, 4. Auflage, Band 13, Seite 279 - 346.

Das erfindungsgemäße Verfahren eignet sich sowohl zur Diazotierung von aromatischen Aminen ohne ionische Gruppen als auch von Aminen mit ionischen Gruppen, insbesondere Sulfonsäuregruppen.

Die Diazotierung kann dabei direkt oder indirekt erfolgen. Bei der einen Verfahrensvariante wird vorzugsweise so vorgegangen, daß eine Dispersion oder Lösung des aromatischen Amins in Wasser in Gegenwart der mindestens äquivalenten Menge einer niedermolekularen Sulfonsäure und der äquimolaren Menge eines Kationenaustauschers mit einem Alkali-oder Erdalkalinitrit diazotiert wird. Die für die Diazotierung notwendige salpetrige Säure wird dabei aus den $H^+$ -Ionen der organische Säure und spontan durch Kontakte des Nitritsalzes mit dem Kationenaustauscher gebildet. Bei der indirekten Verfahrensvariante wird das aromatische Amin in Wasser bei pH 6 - 12, bevorzugt 6 - 9, mit der für die Diazotierung notwendigen Menge an Nitritverbindungen, versetzt und diese Mischung zu einer Suspension des Ionenaustauschers und der aromatischen Sulfonsäure gegeben, wobei spontan Diazotierung einsetzt. Als Nitritverbindungen kommen vorzugsweise $LiNo_2$ und organische Nitrite in Frage.

Bei Verwendung von Ionenaustauschern erfolgt die Entfernung des bei der Diazotierungsreaktion gebildeten Salzes, insbesondere des Alkali- oder Erdalkalisalzes der wasserunlöslichen Säure in einfacher Weise durch Siebung oder Filtration, und zwar entweder unmittelbar nach der Diazotierung oder aber nach der anschließenden Kupplung zum Azofarbstoff.

Bei Verwendung von organischen Nitriten wird die Diazotierung vorteilhafter bevorzugt ohne Zusatz von Ionenaustauschern in Gegenwart von mindestens 2 Mol aromatischer Sulfonsäure durchgeführt.

Nach erfolgter Diazotierung wird in üblicher Weise mit den Kupplungskomponenten umgesetzt, vorzugsweise in Gegenwart anorganischer oder organischer basischer Verbindungen als Säureakzeptoren sowie gegebenenfalls in Gegenwart wassermischbarer organischer Lösungsvermittler, hydrotroper Verbindungen, Puffersubstanzen und/oder nichtionischer Disdispergiermittel.

Gewünschtenfalls können die genannten Lösungsvermittler, hydrotropen Verbindungen und Dispergiermittel auch bereits dem Diazotierungsgemisch zugesetzt werden.

Geeignete basische Verbindungen für die Kupplung sind solche, deren Kation zu einer Verbesserung der Löslichkeit des Farbstoffs führt, bevorzugt basische Li-Verbindungen (wie LiOH, $Li_2CO_3$) und primäre, sekundäre, tertiäre oder quartäre Amine (insbesondere Mono-, Di- und Trialkanolamine oder die entsprechenden ethoxylierten oder propoxylierten Derivate, Morpholin oder Ammoniumhydroxid).

Geeignete wassermischbare organische Verbindungen und/oder hydrotrope Verbindungen sind beispielsweise ein- oder mehrwertige Alkohole, niedrigmolekulare Ether, Glykolether, wasserlösliche aliphatische oder cyclische Amide, Lactame, bevorzugt $\epsilon$-Caprolactam oder N-Alkylpyrrolidone, und/oder niederaliphatische Sulfoxide und/oder schwefelhaltige Verbindungen wie Dimethylsulfon, Sulfolan und der in $\alpha$- und $\beta$-Stellung substituierten Derivate und/oder hydrotrope Verbindungen wie Harnstoff sowie dessen Derivate, besonders bevorzugt N,N-Dimethylharnstoff und/oder Mischungen mit Aminen wie Triethylamin, Triethanolamin.

Im Falle der Herstellung von Lösungen von Reaktivfarbstoffen kommen selbstverständlich nur solche Verbindungen in Frage, die zu keiner die Farbstärke senkenden Reaktion mit der Reaktivgruppe fähig sind, beispielsweise $\epsilon$-Caprolactam, N-Methylpyrrolidon, Dicyandiamid, Dimethylsulfon und/oder N,N-Dimethylharnstoff.

Beim Arbeiten mit Ionenaustauschern in der Diazotierungsphase und Einsatz basischer Lithiumverbindungen bei der Kupplung erhält man direkt und ohne Zwischenisolierung der Farbstoffe stabile konzentrierte Lösungen mit einem sehr geringen Gehalt an Natriumionen. Im Falle der Verwendung von Aminen oder Ammoniumverbindungen sind die resultierenden Lösungen von Azofarbstoffen praktisch frei von Alkali-bzw. Erdalkalikationen.

Vorzugsweise enthalten die nach de neuen Verfahren hergestellten Lösungen neben Wasser:

10 - 35 Gew.-% Farbstoff,
0 - 30 Gew.-% organische Lösungsvermittler und/oder hydrotrope Verbindungen und/oder Dispergiermittel,
0 - 5 Gew.-%, insbesondere 0 - 3 Gew.-% Puffersubstanzen,
1 - 20 Gew.-% Sulfonate, insbesondere Salze von niedermolekularen organischen aromatischen Sulfonsäuren.

Besonders bevorzugt sind hochkonzentrierte Farbstofflösungen mit einem Farbstoffgehalt von 12 - 35 Gew.-%.

Das neue Verfahren eignet sich insbesondere für die Herstellung salzarmer bzw. salzfreier Präparationen konzentrierter wäßriger Lösungen von Reaktivfarbstoffen.

Reaktivfarbstoff-Präparationen werden im allgemeinen Puffersubstanzen für den pH-Bereich 4,5 - 8,5 zugesetzt, beispielsweise Borsäure-, Phosphat- und Hydrogencarbonat-Puffer. Die Lösungen können in üblicher Weise gegebenenfalls nach Zusatz üblicher Einstellmittel zum Trocknen gebracht werden, beispielsweise durch Sprühtrocknung. Man erhält dabei salzarme Pulver- bzw. Granulatformierungen.

Besonders geeignete Reaktivfarbstoffe sind solche der Formel:

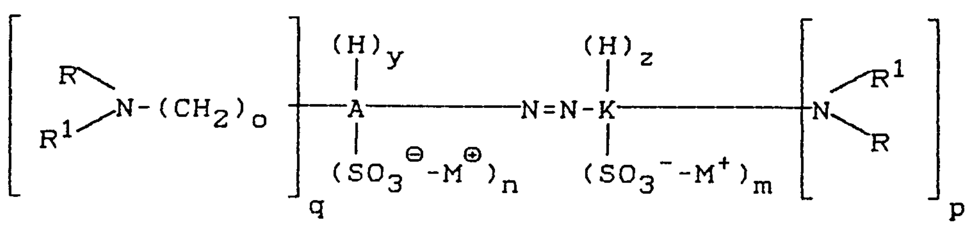

worin

A = Rest einer Diazokomponente,
K = Rest einer Kuplungskomponente,
$M^+$ = H, Li, Na, $NH_4$ oder $N(R^2)_4$, wobei

$R^2$ = Alkyl, insbesondere gegebenenfalls durch OH substituiertes $C_1$-$C_4$-Alkyl oder -($R^3$O)-$t_H$ mit $R^3$ = $C_2$-$C_3$-Alkyl und t = 2 - 5,

R = Reaktivrest,

$R^1$ = Wasserstoff oder Alkyl ($C_1$-$C_4$),

m,n = ganze Zahl von 0 - 6, wobei n + m = 1 - 6,

p,q = q = 0 oder 1, wobei p + q = 1 oder 2,

o = 1 bis 4,

y,z = 0 oder 1, wobei y + z = 1 oder 0 und wobei q + y = 1, sowie p + z = 1.

Unter Reaktivresten R werden dabei solche verstanden, die eine oder mehrere reaktive Gruppen oder abspaltbare Substituenten aufweisen, welche unter Färbebedingungen in Gegenwart säurebindender Mittel, mit den Hydroxylgruppen der Zellulose oder den NH-Gruppen von natürlichen oder synthetischen Polyamiden unter Ausbildung kovalenter Bindungen zu reagieren vermögen.

Geeignete Reaktivgruppen, welche mindestens eine abspaltbaren Substituenten an einem heterocyclischen Rest gebunden enthalten, sind unter anderem solche, die mindestens eine reaktiven Substituenten, an einem 5- oder 6-gliedrigen heterocyclischen Ring gebunden enthalten, wie einen Monazin-, Diazin-, Triazin-, z.B. Pyridin-, Pyrimidin-, Pyridazin-, Thiazin-, Oxazin- oder asymmetrischen oder symmetrischen Triazinring, oder an ein derartiges Ringsystem, welches einen oder mehrere ankondensierte Ringe aufweist, wie ein Chinolin, Phthalazin-, cinnolin-, Chinazolin-, Chinoxalin-, Acridin-, Phenazin- und Phenanthridin-Ringsystem; die 5- oder 6-gliedrigen heterocyclischen Ringe, welche mindestens eine reaktiven Substituenten aufweisen, sind demnach bevorzugt solche, die ein oder mehrere Stickstoffatome enthalten und 5- oder bevorzugt 6-gliedrige carbocylische Ringe ankondensiert enthalten können.

Unter den reaktiven Substituenten am Heterocyclus sind beispielsweise zu erwähnen:

Halogen (Cl, Br oder F), Azido ($N_3$), Rhodanido, Thio, Thiolether, Oxyether.

Bevorzugt sind im Fall der vorliegenden Erfindung Reaktivfarbstoffe mit Reaktivgruppen auf Basis folgender Systeme:

Mono- oder Dihalogen-symmetrische Triazinylreste, Mono-, Di- oder Trihalogenpyrimidinylreste oder halogensubstituierte Chinoxalinylcarbonylreste.

Insbesondere bevorzugt sind folgende Reaktivgruppen der Formeln (2), (3) und (4):

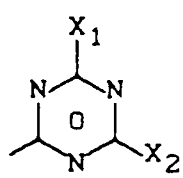

(2)

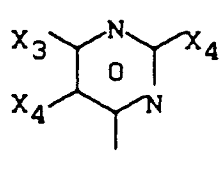

(3)

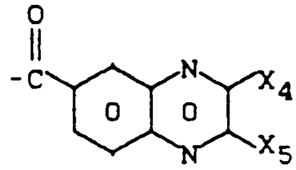

(4)

wobei in den Formeln (2), (3) und (4) gilt:

$X_1$ = F,

$X_2$ = Cl, F, $NH_2$, $NHR^2$, $OR^2$, $CH_2R^2$, $SR^2$m

$X_3$ = Cl, F, $CH_3$,

$X_4$ = Cl, F und

$X_5$ = Cl, F, $CH_3$

und wobei

$R^2$ = Alkyl (insbesondere gegebenenfalls durch OH, $SO_3H$ COOH substituiertes $C_1$-$C_4$-Alkyl) Aryl (insbesondere gegebenenfalls durch $SO_3H$,$C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-Alkoxy substituiertes Benzyl).

Farbstoffe, welche die obengenannten Reaktivgruppensysteme enthalten, sind beispielsweise aus folgenden Publikationen bekannt:

US-PS 3 377 336, US-PS 3 527 760,
GB-PS 1 169 254, US-PS 3 669 951,
DE-PS 1 644 208, GB-PS 1 188 606,
DE-OS 2 817 780, ES-PS 479 771.

Unter den nicht heterocylischen Reaktivresten sind beispielsweise zu erwähnen β-Chlorethylsulfonyl-, β-Acetoxyethylsulfonyl-, β-Sulfatoethylsulfonyl-, β-Thiosulfatoethylsulfonyl-,β-Sulfatoethylsulfonylmethylamino- und Vinylsulfonylmethylamino-Gruppen.

Die nach dem erfindungsgemäßen Verfahren erhaltenen Produkte finden vielerlei Verwendung, z.B. für die Zubereitung von Färbebädern oder Druckpasten zum Färben von natürlichen und synthetischen Substraten, insbesondere Baumwolle, Wolle, Regeneratcellulose, Papier und Leder.

Beispiel 1

1 Mol 1-Amino-(4-aminobenzoyl)-8-hydroxy-3,6-napththalindisulfonsäure werden in 2200 ml Wasser mit $LiOH.H_2O$ bei pH = 4,5 mit 1,05 Mol 2,4,6-Trifluor-5-chlorpyrimiden bei 10°C umgesetzt. 1 Mol Aminobenzolsulfonsäure-2 werden in 600 ml Wasser mit $LiOH.H_2O$ neutral gelöst. Nach Zugabe von 800 ml eines stark sauren gelförmigen Kationenaustauschers auf Basis von vernetztem Polystyrol mit einer Kapazität von 2 Mol $SO_3H$-Gruppen pro Liter und 0,8 Mol p-Toluolsulfonsäure wird mit 1 Mol 30 %iger $NANO_2$-Lösung bei 5°C diazotiert. Nach beendeter Diazotierung gibt man die Mischung bie 10°C zur Kupplungskomponente, wobei der Kupplungs-pH-Wert durch Zugabe eines Kondensationsproduktes von Triethanolamin mit 3 Mol Ethylenoxid bei pH = 6 gehalten wird. Nach erfolgter Kupplung gibt man 700 g ε-Caprolactam und 100 ml Wasser zu. Nach Abfiltrieren des Austauscherharzes erhält man eine konzentrierte Lösung, die 15 % des Reaktivfarbstoffes mit der Formel (5) bezogen auf freie Säure enthält.

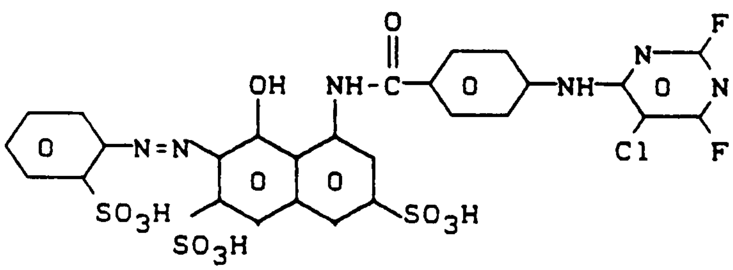

(5)

Arbeitet man nach dem Verfahren der DE-OS 3 228 339 (Diazotierung in 2 Mol $H_2SO_4$ und Kupplung mit 2 Mol $CaCO_3$) erhält man lediglich eine Suspension des Reaktivfarbstoffs (5).

Beispiel 2

1 Mol 1-Amino-(4-aminobenzoyl)-8-hydrozy-3,6-naphthalindisulfonsäure-Mono-Na-Salz werden in 2200 ml wasser mit $LiOH.H_2O$ bei pH = 4,5 mit 1,05 Mol 2,4,6-Trifluor-5-chlorpyrimidinbei 10°C umgesetzt. 1 Mol Aminobenzolsulfonsäure-2 werden in 600 ml Wasser mit $LiOH.H_2O$ neutral gelöst. Nach Zugabe von 800 ml eines stark sauren gelförmigen Kationenaustauschers auf Basis von vernetztem Polystyrol mit einer Kapazität von 2 Mol $SO_3H$-Gruppen pro Liter und 0,8 Mol p-Toluolsulfonsäure wird mit 1 Mol 30 %iger $NaNo_2$-Lösung bei 5°C diazotiert. Nach beendeter Diazotierung gibt man die Mischung bei 10°C zur Kupplungskomponente, wobei der Kupplungs-pH-Wert durch Zugabe eines Kondensationsproduktes von Triethanolamin mit 3 Mol Ethylenoxid bei pH = 6 gehalten wird. Nach erfolgter Kupplung gibt man 700 g ε-Caprolactam und 1000 ml Wasser zu. Nach Abfiltrieren des Austauscherharzes erhält man eine konzentrierte Lösung, die 15 % des Reaktivfarbstoffes mit der Formel (5) bezogen auf freie Säure enthält.

Beispiel 3

1 Mol 1-Amino-8-hydroxy-4,6-naphthalindisulfonsäure werden in 460 ml Wasser mit $LiOH.H_2O$ neutral gelöst und mit Natronlauge (400 g/l) bei pH 8,5 und 10 °C mit 1,10 Mol 2,4-Difluor-5-chlor-6-methylpyrimidin umgesetzt.

1 Mol 1-Aminobenzolsulfonsäure-2 werden in 920 ml Wasser suspendiert und mit 2,2 Mol p-Toluolsulfonsäure versetzt.

Man gibt bei 5 °C 1 Mol 30 %ige Natriumnitritlösung zu. Nach beendeter Diazotierung wird mit der wie oben angegeben hergestellten Lösung des Kondensationsproduktes von 1-Amino-8-hydroxynaphthalin-3,6-disulfonsäure mit 2,4-Difluor-5-chlor-6-methylpyrimidin gekuppelt. Der pH-Wert wird dabei mit $LiOH.H_2O$ bei 6 gehalten. Nach Zugabe von 1000 ml enthärtetem Wasser und 460 g N,N-Diemthylharnstoff erhält man eine konzentrierte Lösung, die 12 % des Reaktivfarbstoffs enthält. Nach Eintragen dieser konzentrierten Reaktivfarbstofflösung in Wasser unter Zugabe der für die Reaktivfärberei üblichen Hilfsmittel erhält man eine Präparation zum Färben oder Bedrucken von natürlichen und regenerierten Cellulosefasern in rotem Ton.

Beispiel 4

1 Mol 2,4-Diaminobenzolsulfonsäure werden in 690 ml Wasser mit $LiOH.H_2O$ gelöst und mit 1,05 Mol 2,4-Difluor-5-chlor-6-methylpyrimidin umgesetzt. Zum Kondensationsprodukt gibt man, 2,3 Mol p-Toluolsulfonsäure und diazotiert die Suspension bei 5 °C mit 1 Mol Lithiumnitritlösung. Nach beendeter Diazotierung wird mit einer Lösung der Kupplungskomponente, die wie nachfolgend angegeben hergestellt worden ist, bei 5 °C gekuppelt. Der pH-Wert wird dabei mit $LiOH.H_2O$ bei 8,5 gehalten. Die Kupplungskomponente wird folgendermaßen hergestellt:

1 Mol 1-Amino-2,5-benzoldisulfonsäure wird in 250 ml Wasser und 2,2 Mol p-Toluolsulfonsäure suspendiert. Bei 5 °C diazotiert man mit 1 Mol Lithiumnitritlösung und kuppelt nach beendeter Diazotierung mit Acetbernsteinsäuredimethylester bei 5 - 20 °C. Mit 0,3 Mol Natriumacetatlösung und 1,7 Mol Natriumhydrogencarbonat wird ein pH von 5 eingestellt. Nach Erhöhung des pH-Wertes auf 8,5 mit $LiOH.H_2O$ erfolgt der Ringschluß bei 60 °C. Durch Zugabe von 1 Mol $LiOH.H_2O$ wird bei der gleichen Temperatur verseift. Nach beendeter Verseifung werden 600 g $\epsilon$-Caprolactam zugegeben. Man erhält eine Lösung der Kupplungskomponente. Aus der Kupplung mit dem diazotierten Kondensationsprodukt erhält man eine konzentrierte Lösung, die 16,5 % des Reaktivfarbstoffs enthält.

Beispiel 5

Zu einer Suspension aus 1 Mol N-(4-Aminophenyl)-acetamid, 200 ml Wasser und 1 Mol Ethylnitrit werden bei 0 °C 2 Mol p-Toluolsulfonsäure zugegeben. Nach beendeter Diazotierung werden 1 Mol Anilin und 2 Mol p-Toluolsulfonsäure zugegeben. Mit 1 Mol Ethylnitrit wird bei 0 °C diazotiert und man kuppelt anschließend mit 1 Mol 7,7'-(Carbonyldiimino)bis-4-hydroxy-2-naphthalin-sulfonsäure. Der Kupplungs-pH-Wert wird mit Methyl-diethanolamin bei 7,5 gehalten. Mer erhält eine Lösung, die 12 % des Farbstoffs enthält.

## Patentansprüche

**1.** Verfahren zur Herstellung von konzentrierten wäßrigen Lösungen von anionischen Azofarbstoffen durch Diazotieren eines aromatischen Amins und Kuppeln auf eine sulfogruppenhaltige Kupplungskomponente in Abwesenheit der sonst üblichen Mineral- und Fettsäuren, dadurch gekennzeichnet, daß man als Saurespender für die Diazotierungsreaktion eine niedermolekulare nichttensidartige aromatische Sulfonsäure verwendet.

**2.** Verfahren nach Anspruch 1, dadurch gekennzeichnet, daß man als Sulfonsäure Mono- oder Polysulfonsäuren der Benzol-, Naphthalin- oder Diphenylreihe verwendet.

**3.** Verfahren nach Anspruch 1, dadurch gekennzeichnet, daß man als Sulfonsäure p-Toluolsulfonsäure verwendet.

4. Verfahren nach Anspruch 1, dadurch gekennzeichnet, daß man neben der niedermolekularen aromatischen Sulfonsäure einen festen säuregruppenhaltigen Kationenaustauscher verwendet.

5. Verfahren nach Anspruch 1, dadurch gekennzeichnet, daß zur Diazotierung $LiNO_2$ oder organische Nitrite verwendet werden.

6. Verfahren nach Anspruch 1 oder 5, dadurch gekennzeichnet, daß man als Ionenaustauscher stark saure Harze auf Basis von Polystyrolsulfonsäuren oder Phenol-/Formaldehydkondensaten verwendet.

7. Verfahren nach Anspruch 1, dadurch gekennzeichnet, daß man mindestens 1 Äquivalent an niedermolekularer Sulfonsäure und etwa 1 Äquivalent des Ionenaustauschers - bezogen auf die Nitritmenge - verwendet.

8. Verfahren nach Ansprüchen 1 bis 7, dadurch gekennzeichnet, daß man wäßrige Lösungen, enthaltend

| | |
|---|---|
| 10-35 Gew.-% | anionischer Farbstoff |
| 0-30 Gew.-% | organische Lösungsvermittler und/oder hydrotrope Verbindungen und/oder Dispergiermittel, |
| 1-20 Gew.-% | Sulfonate und |
| 0- 5 Gew.-% | Puffersubstanzen |

herstellt.

9. Verfahren nach Ansprüchen 1 bis 7, dadurch gekennzeichnet, daß man Lösungen von Reaktivfarbstoffen herstellt.

10. Verwendung von konzentrierten Lösungen, erhalten gemäß Ansprüchen 1 bis 9 zur Herstellung von Färbebädern oder Druckpasten zum Färben von Baumwolle, Wolle, Regeneratcellulose, Papier oder Leder.

**Claims**

1. Process for preparing concentrated aqueous solutions of anionic azo dyestuffs by diazotizing an aromatic amine and coupling onto a sulpho-containing coupling component in the absence of otherwise customary mineral and fatty acids, characterized in that the acid donor used for the diazotization reaction is a low molecular weight, nonsurfactantlike aromatic sulphonic acid.

2. Process according to Claim 1, characterized in that the sulphonic acid used is a monosulphonic or polysulphonic acid of the benzene, naphthalene or diphenyl series.

3. Process according to Claim 1, characterized in that the sulphonic acid used is p-toluenesulphonic acid.

4. Process according to Claim 1, characterized in that a solid cation exchanger which contains acid groups is used in addition to the low molecular weight aromatic sulphonic acid.

5. Process according to Claim 1, characterized in that $LiNO_2$ or organic nitrites are used for the diazotization.

6. Process according to Claim 1 or 5 characterized in that the ion exchanger used is a strongly acid resin based on polystyrenesulphonic acids or phenol/formal-dehyde condensates.

7. Process according to Claim 1, characterized in that at least 1 equivalent of low molecular weight sulphonic acid and about 1 equivalent of the ion exchanger, based on the amount of nitrite, are used.

8. Process according to Claims 1 to 7, characterized in that aqueous solutions containing
10 - 35% by weight of anionic dyestuff
0 - 30% by weight of organic solubilizers and/or hydrotropic compounds and/or dispersants,
1 - 20% by weight of sulphonates and
0 - 5% by weight of buffer substances are prepared.

9. Process according to Claims 1 to 7, characterized in that solutions of reactive dyestuffs are prepared.

10. Use of concentrated solutions obtained according to Claims 1 to 9, for preparing dyebaths or print pastes for dyeing cotton, wool, regenerated cellulose, paper or leather.

**Revendications**

1. Procédé de préparation de solutions aqueuses concentrées de colorants azoïques anioniques par diazotation d'une amine aromatique et copulation sur un copulant contenant des groupes sulfo en t'absence des acides minéraux et des acides gras usuels à cet effet, caractérisé en ce que l'on utilise en tant que source d'acidité pour la réaction de diazotation un acide sulfonique aromatique à bas poids moléculaire non tensioactif.

2. Procédé selon ta revendication 1, caractérisé en ce que l'acide sulfonique est un acide mono- ou polysulfonique de la série du benzène, du naphtalène ou du diphényle.

3. Procédé selon la revendication 1, caractérisé en ce que l'acide sulfonique utilisé est l'acide p-toluène-sulfonique.

4. Procédé selon la revendication 1, caractérisé en ce que, en plus de l'acide sulfonique aromatique à bas poids moléculaire, on utilise un échangeur de cations solide contenant des groupes acides.

5. Procédé selon la revendication 1, caractérisé en ce que l'on diazote à l'aide de $LiNO_2$ ou d'un nitrite organique.

6. Procédé selon la revendication 1 ou 5, caractérisé en ce que l'on utilise en tant qu'échangeurs d'ions des résines fortement acides à base d'acides polystyrène-sulfoniques ou de condensats phénol/formaldéhyde.

7. Procédé selon la revendication 1, caractérisé en ce que l'on utilise au moins un équivalent de l'acide sulfonique à bas poids moléculaire et environ 1 équivalent de l'échangeur d'ions - par rapport à la quantité de nitrite -.

8. Procédé selon les revendications 1 à 7, caractérisé en ce que l'on prépare des solutions aqueuses contenant :

| | |
|---|---|
| 10 à 35% | en poids de colorant anionique, |
| 0 à 30% | en poids d'agents solubilisants organiques et/ou de composés hydrotropes et/ou d'agents dispersants, |
| 1 à 20% | en poids de sulfonates, et |
| 0 à 5% | en poids de substances tampons. |

9. Procédé selon les revendications 1 à 7, caractérisé en ce que l'on prépare des solutions de colorants réactifs.

10. Utilisation de solutions concentrées obtenues selon les revendications 1 à 9 pour la préparation de bains de teinture ou de pâtes d'impression pour la teinture ou l'impression du coton, de la laine, de la cellulose régénérée, du papier ou du cuir.